(19) Europäisches Patentamt
European Patent Office
Office européen des brevets

(11) EP 2 931 041 B1

(12) **EUROPEAN PATENT SPECIFICATION**

(45) Date of publication and mention of the grant of the patent:
**16.11.2016 Bulletin 2016/46**

(21) Application number: **14706617.9**

(22) Date of filing: **26.02.2014**

(51) Int Cl.:
*A01P 7/02* (2006.01) *A01P 7/04* (2006.01)
*A01N 51/00* (2006.01) *A01N 53/00* (2006.01)

(86) International application number:
**PCT/EP2014/053696**

(87) International publication number:
**WO 2014/131786 (04.09.2014 Gazette 2014/36)**

# (54) VETERINARY COMPOSITION FOR DERMAL APPLICATION

VETERINÄRE ZUSAMMENSETZUNG ZUR DERMALEN ANWENDUNG

COMPOSITION VÉTÉRINAIRE POUR APPLICATION DERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.02.2013 SI 201300041**

(43) Date of publication of application:
**21.10.2015 Bulletin 2015/43**

(73) Proprietor: **KRKA, d.d., Novo mesto**
**8501 Novo mesto (SI)**

(72) Inventors:
- **LESKOVAR, Denise**
  **2317 Oplotnica (SI)**
- **URSIC, Darko**
  **1292 Ig (SI)**
- **KOLENC, Ivanka**
  **8000 Novo mesto (SI)**

(74) Representative: **Andrae | Westendorp Patentanwälte Partnerschaft**
**Uhlandstraße 2**
**80336 München (DE)**

(56) References cited:
**EP-B1- 1 379 138** **WO-A2-02/43494**
**US-A1- 2006 014 724** **US-A1- 2006 211 655**
**US-A1- 2012 294 922**

- **K. HELLMANN ET AL: "European multicenter field trial on the efficacy and safety of a topical formulation of imidacloprid and permethrin (Advantix TM ) in dogs naturally infested with ticks and/or fleas", PARASITOLOGY RESEARCH, vol. 90, no. 0, 1 July 2003 (2003-07-01), pages S125-S126, XP55112717, ISSN: 0932-0113, DOI: 10.1007/s00436-003-0912-8**
- **MIRO ET AL: "Evaluation of the efficacy of a topically administered combination of imidacloprid and permethrin against Phlebotomus perniciosus in dog", VETERINARY PARASITOLOGY, ELSEVIER SCIENCE, AMSTERDAM, NL, vol. 143, no. 3-4, 20 January 2007 (2007-01-20), pages 375-379, XP005855048, ISSN: 0304-4017, DOI: 10.1016/J.VETPAR.2006.09.014**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 931 041 B1

## Description

### Field of the invention

The present invention relates to a novel formulation for dermal administration comprising permethrin and imidacloprid for controlling parasitic insects on animals.

### Background of the invention

Permethrin is an insecticide in the pyrethroid chemical family. IUPAC name for permethrin is 3-phenoxybenzyl (1RS,3RS;1RS,3SR)-3-(2,2-dichlorovinyl)-2,2-dimethyl-cyclopropanecarboxylate and the Chemical Abstracts Service (CAS) registry number is 52645-53-1. Permethrin is considered a type I pyrethroid.

Permethrin is active against a broad range of pests including lice, ticks, fleas, mites, and other arthropods. It acts on the nerve cell membrane to disrupt the sodium channel current by which the polarization of the membrane is regulated. Delayed repolarization and paralysis of the pests are the consequences of this disturbance.

Topical formulations comprising permethrin, for controlling parasitic insects on animals are disclosed in EP120286 where glycol or glycerol ester of a C8-10 fatty acid was used as a carrier. In EP518989 a composition comprising more than 50% and up to 85% by weight of pyrethroid, such as permethrin, in alkyl glycol ether carrier is disclosed. EP 1638404 discloses composition comprising 50% to 90% by weight of permethrin and isopropylmyristat as a liquid carrier.

Imidacloprid, 1-(6-Chloro-3-pyridylmethyl)-N-nitro-imidazolidin-2-ylideneamine, is an ectoparasiticide belonging to the chloronicotinyl group of compounds. Chemically, it can be classified as a chloronicotinyl nitroguanidine. Imidacloprid is effective against adult fleas and larval flea stages. In addition to the adulticide flea efficacy of imidacloprid, a larvicidal flea efficacy in the surroundings of the treated pet has been demonstrated. Larval stages in the animal's immediate surroundings are killed following contact with a treated animal. It has a high affinity for the nicotinergic acetylcholine receptors in the post-synaptic region of the central nervous system (CNS) in insects. The ensuing inhibition of cholinergic transmission in insects results in paralysis and death of the parasite.

Non-systemic use of imidacloprid for control of parasitic insects from the group of fleas, lice and flies on human and animals is known from EP682869. The solvents used as carrier solvents in topical formulation disclosed are solvents such as propylene or ethylene carbonate, benzyl alcohol and pyrrolidones. The same solvents have been used in spot-on formulations comprising agonists or antagonists of nicotinic acetylcholine receptors of insects for controlling parasitic insects on animals disclosed in EP 796042. EP 892606 discloses imidacloprid formulation comprising cyclic carbonates as a carrier solvent.

Combinations of permethrin with agonists or antagonists of nicotinic acetylcholine receptors of insects for controlling parasites have already been described in the prior art. EP682869 discloses composition of imidacloprid for non-systemic use which may be combined with other insecticide such as permethrin. In US 5661164 a combination for combating termites is disclosed. WO2002/043494 discloses synergistic composition comprising imidacloprid and permethrin for control of parasitic insects and acarids on animals. As solvents suitable for preparation of the formulation solvents such as water, oils, pyrrolidones, alcohols and cyclic carbonates are listed. EP 1379138 and US 2006/211655 disclose a composition comprising permethrin, imidaclopride and particular amount of N-methyl pyrrolidone. US 2006/014724 describes a synergistic insecticidal composition comprising 10wt.% permethrin, 2.5 wt.% imidacloprid and 5% of the solvent DMSO. Permethrin is a strongly aprotic compound, whereas imidacloprid is a protic compound. Thus, it is not easy to find a topically applicable liquid formulation which comprises both active compounds which provides good solubility of the active compounds, does not cause irritations and does not enhance skin penetration and at the same time provides high efficacy.

For commercially available product comprising imidacloprid and permethrin side effects are reported such as skin irritation and alopecia at the application site. Side effects are attributable to permethrin which is present in high concentration.

Accordingly, it was an object of the present invention to provide a skin-non-irritating and environmentally friendly formulation for dermal application of a combination of permethrin and imidacloprid active against parasitic insects, in particular against ticks and fleas.

### Detailed description of the invention

This object is achieved by the compositions according to present invention. The present invention relates to a composition for dermal application comprising

i) 35-55% by weight of the active compound permethrin

ii) 5-15% by weight of imidacloprid
iii) 20-60% by weight of dimethyl sulfoxide and
iv) optionally one or more veterinarily acceptable excipients.

The weight percentages given are based on the total weight of the composition.

The term "composition for dermal application" encompasses the formulation, such as pour-on or spot-on formulation or a formulation for distribution in the sebacious glands. According to the present invention, the preferred formulation is spot-on formulation which is applicable topically to the skin.

For the composition according to present invention it is possible to use all customary isomer ratios of the active permethrin compound. Permethrin consist of a mixture of the 1 RS, 3RS (cis) and 1RS, 3SR (trans) diastereoisomers. The preferred isomer ratios used according to present invention are cis:trans 80:20,. 40:60 or 25:75. The particularly preferred isomer ratio is cis:trans 40:60. Permethrin purity grades used in the composition according to the present invention can be above 90%, preferably above 95% as determined by HPLC.

Preferably, permethrin is a mixture of permethrin diasteromers, which mixture can comprise 1RS, 3RS (cis) diastereoisomer in an amount of 25 to 80 % by weight, preferably 36 to 44 % by weight, based on the total weight of the mixture of permethrin diasteromers, and/or 1RS, 3SR (trans) diastereoisomer in an amount of 20 to 75 % by weight, preferably 56 to 64 % by weight, based on the total weight of the mixture of permethrin diasteromers.

The content of permethrin in the composition according to the invention can vary between 35% and 55% by weight, preferably between 40 and 50% by weight.

The content of imidacloprid may vary between 5 and 15% by weight, preferably between 6 and 12% by weight and most preferably 7% and 10% by weight. Purity grade of imidacloprid used in the composition of the present invention can be above 90%, preferably above 95% as determined by HPLC.

The amount of DMSO included in the composition according to present invention may be in the range of 20% to 60% by weight. Preferably it is in the range from 25 to 50% by weight.

By the composition of the present invention comprising DMSO in above specified amounts several problems have been solved.

Both active ingredients are soluble in DMSO, thus the composition according to present invention affords solubility of both actives in all concentrations claimed and there is no need for any additional excipients to be included into the formulation.

DMSO is rapidly absorbed skin penetrant and has the ability to carry active ingredients through membranes, thereby provides for rapid absorption of both active ingredients.

DMSO has anti-oxidative properties and provides for stabilization of the active ingredients against oxidative decomposition, thus compositions according to present invention retain their therapeutic activity and their specific properties over a longer period of time.

The presence of DMSO in compositions of the present invention can also contribute to providing a skin-non-irritating and environmentally friendly formulation for dermal application, and furthermore may also contribute an analgesic activity, a swelling-reducing activity, and/or an anti-inflammatory activity.

The combination of permethrin, imidacloprid, and dimethyl sulfoxide contributes to the beneficial activity of the composition of the present invention, especially when the composition is topically applied onto skin regions and/or hair, where parasites (in particular ectoparasites, e.g. ticks) are attached to or are penetrating into the skin. The analgesic, swelling-reducing and/or anti-inflammatory activities provided by a composition of the present invention comprising DMSO may contribute to increasing the treatment acceptance of subjects (e.g. animals, especially pet and farm animals) treated with a composition of the present invention. An increased treatment acceptance of subjects, especially animals, treated with a composition of the present invention, will in turn largely facilitate the time-intensive work of treating subjects (e.g. pet animals) with a composition of the present invention.

The composition of the present invention may additionally comprise one or more veterinarily acceptable excipients which may be selected from the group of co-solvents, stabilizers, antioxidant(s), anti-nucleating agents, spreading agent(s), and/or systemic absorption retardant(s). A single excipient may have one or more functions.

The composition may additionally comprise up to 20% by weight of co-solvents, up to 0.3% by weight of antioxidants, up-to 0.3% by weight of stabilizers, up to 10% by weight of anti-nucleating agent and/or up to 10 % of spreading agent.

The amounts of antioxidant may be in the range of 0-0.3% by weight, preferably in the range of 0.05-0.25%, most preferably in the range of 0.05-0.15%. Antioxidants can be selected from antioxidants conventionally used in veterinary preparations, preferably antioxidants selected from the group butylated hydroxytoluene (BHT), butylated hydroxyanisole (BHA), tocopherol, sodium metabisulphite, propyl gallate and sodium thiosulphate, or a mixture of not more than two of these agents.

The amount of stabilizers may be in the range of 0-0.3%, preferably in the range of 0.05-0.25%, most preferably in the range of 0.05-0.15%. Stabilizers can be selected from the group of organic acids such as citric acid, ascorbic acid,

tartaric acid, lactic acid, succinic acid and malic acid.

The amounts of co-solvent may be in the range of 0-20% by weight, preferably 5-20%. Co-solvents can be selected from the group of pyrrolidones such as N - methyl-2-pyrrolidone (NMP) , 2-pyrrolidone; polyethers as diethylene glycol monoethyl ether, dipropylene glycol monomethyl ether, butyl diglycol, dipropylene glycol monomethyl ether, tetrahydrofurfuryl alcohol and tetrahydrofurfuryl ethoxylate; cyclic carbonates such as propylene carbonate, imidazoles such as N-methyl imidazole, dimethylimidazole; dimethylacetamide, dimethylformamide, monomethylacetamide, acetonitrile, sulfolane. Preferably co-solvent is selected from NMP and N-methylimidazole.

The amounts of anti-nucleating agent may be in the range of 0-10% by weight, preferably 0-7% by weight, most preferably 0-5% by weight.

Antinucleating agents are used to suppress crystal growth during shelf life and at the application site. They can be selected from but are not limited to: polyvinylpyrrolidone, polyvinyl alcohols, copolymers of vinyl acetate and of vinylpyrrolidone, polyethylene glycols, benzyl alcohol, mannitol, glycerol, sorbitol or polyoxyethylenated esters of sorbitan; lecithin or sodium carboxymethylcellulose; or acrylic derivatives, such as methacrylates and others, anionic surfactants, such as alkaline stearates, in particular sodium, potassium or ammonium stearate; calcium stearate or triethanolamine stearate; sodium abietate; alkyl sulphates, in particular sodium lauryl sulphate and sodium cetyl sulphate; sodium dodecylbenzenesulphonate or sodium dioctyl sulphosuccinate; or fatty acids, in particular those derived from coconut oil, cationic surfactants, such as water-soluble quaternary ammonium salts of formula $N^+R'R''R'''R''''Y^-$, in which the R radicals are identical or different optionally hydroxylated hydrocarbon radicals and $Y^-$ is an anion of a strong acid, such as halide, sulphate and sulphonate anions; cetyltrimethylammonium bromide is one of the cationic surfactants which can be used, amine salts of formula NR'R"R"', in which the R radicals are identical or different optionally hydroxylated hydrocarbon radicals; octadecylamine hydrochloride is one of the cationic surfactants which can be used, non-ionic surfactants, such as optionally polyoxyethylenated esters of sorbitan, or polyoxyethylenated alkyl ethers; polyethylene glycol stearate, polyoxyethylenated derivatives of castor oil, polyglycerol esters, polyoxyethylenated fatty alcohols, polyoxyethylenated fatty acids or copolymers of ethylene oxide and of propylene oxide, amphoteric surfactants, such as substituted lauryl compounds of betaine, or a mixture of at least two of the compounds listed above.

Sorbitan fatty acid esters and polyoxyethylene sorbitan fatty acid esters are the preferred surface-active agents used in the present invention. Preferably PEG(20)sorbitan monolaurate, common commercial brand names include Alkest TW 20 and Tween 20, and Polyoxyethylene (20) sorbitan monooleate, common commercial brand name include Alkest TW 80 and Tween 80, are used. Antinucleating agents can by its nature act also as a systemic absorption retardant.

The amounts of spreading agent may be in the range of 0-10% by weight, preferably 0-7% by weight, most preferably 0-5% by weight.

As a spreading agent may be used fatty acid esters, such as isopropyl myristate, and triglycerides such as $C_8$ -$C_{10}$ caprylic/capric triglyceride which can be selected from Crodamol GTCC, Rofetan GTCC, Miglyol 810, 812, 818, 829, 840 and 8810. Spreading agents afford excellent spreadability on the skin and good skin absorption of the composition according to present invention.

A composition for dermal application according to the present invention, preferably for spot-on application, can comprise

i) 35-55% by weight, preferably 40-50% by weight, of the active compound permethrin,
ii) 5-15% by weight, preferably 6-12% by weight, more preferably 7-10% by weight, of imidacloprid,
iii) 20-60% by weight, preferably 25-50% by weight, of dimethyl sulfoxide,
and optionally one or more excipients. Preferably, these excipients are pharmaceutically acceptable excipients or veterinarily acceptable excipients or both pharmaceutically and veterinarily acceptable excipients.

Compositions can be pharmaceutical compositions, especially veterinary compositions and pharmaceutical compositions for administration to humans.

Appropriate excipient(s), in particular pharmaceutically and/or veterinarily acceptable excipient(s), can be chosen by a skilled person on the basis of the general knowledge in the art and on the basis of the teachings provided in the present application. The term "pharmaceutically acceptable" as used herein can in particular indicate that the "pharmaceutically acceptable" excipient is suitable for administration to a subject to achieve a treatment without unduly deleterious side effects in light of the severity of the disease or condition, especially of the parasite infestation, and necessity of the treatment. The term "veterinarily acceptable" as used herein can in particular indicate that the "veterinarily acceptable" excipient is suitable for administration to a subject (e.g. an animal, especially a warm-blooded animal) to achieve a treatment without unduly deleterious side effects in light of the severity of the disease or condition, especially of the parasite infestation, and necessity of the treatment.

A composition according to the present invention can comprise

i) 35-55% by weight, preferably 40-50% by weight, of the active compound permethrin,

ii) 5-15% by weight, preferably 6-12% by weight, more preferably 7-10% by weight, of imidacloprid
iii) 20-60% by weight, preferably 25-50% by weight, of dimethyl sulfoxide,
iv) 0-20% by weight, preferably 5-20% by weight, of co-solvent,
and optionally furthermore one or more of
v) 0- 0.3% by weight, preferably 0.05-0.25% by weight, most preferably 0.05-0.15% by weight, of antioxidant,
vi) 0-0.3% by weight, preferably 0.05-0.25% by weight, most preferably 0.05-0.15% by weight, of stabilizer,
vii) 0-10% by weight, preferably 0-7% by weight, more preferably 0-5% by weight, especially 0.01-5%, of anti-nucleating agent, and
viii) 0-10 % by weight, preferably 0.1-7 % by weight, more preferably 1-5 % by weight, especially 2-5 % by weight, of spreading agent.

In embodiments of compositions of the present invention comprising co-solvent, the co-solvent can be selected from the group consisting of pyrrolidones, such as N -methyl-2-pyrrolidone (NMP), 2-pyrrolidone; polyethers as diethylene glycol monoethyl ether, dipropylene glycol monomethyl ether, butyl diglycol, dipropylene glycol monomethyl ether, tetrahydrofurfuryl alcohol and tetrahydrofurfuryl ethoxylate; cyclic carbonates such as propylene carbonate, imidazoles such as N-methyl imidazole, dimethylimidazole; dimethylacetamide, dimethylformamide, monomethylacetamide, acetonitrile, sulfolane, and mixtures thereof. Especially, the co-solvent can be selected from the group consisting of NMP and N-methylimidazole.

Furthermore, a composition according to the present invention can comprise

i) 35-55% by weight, preferably 40-50% by weight, of the active compound permethrin,
ii) 5-15% by weight, preferably 6-12% by weight, more preferably 7-10% by weight, of imidacloprid
iii) 20-60% by weight, preferably 25-50% by weight, of dimethyl sulfoxide,
iv) 0- 0.3% by weight, preferably 0.05-0.25% by weight, most preferably 0.05-0.15% by weight, of antioxidant,
and optionally furthermore one or more of
v) 0-20% by weight, preferably 5-20% by weight, of co-solvent,
vi) 0-0.3% by weight, preferably 0.05-0.25% by weight, most preferably 0.05-0.15% by weight, of stabilizer,
vii) 0-10% by weight, preferably 0-7% by weight, more preferably 0-5% by weight, especially 0.01-5%, of anti-nucleating agent, and
viii) 0-10 % by weight, preferably 0.1-7 % by weight, more preferably 1-5 % by weight, especially 2-5 % by weight, of spreading agent.

In embodiments of compositions of the present invention comprising antioxidant, the antioxidant can be selected from the group consisting of butylated hydroxytoluene (BHT), butylated hydroxyanisole (BHA), tocopherol, sodium metabisulphite, propyl gallate and sodium thiosulphate, and mixtures of not more than two of these agents. More preferably, the antioxidant can be selected from BHA or BHT.

Furthermore, a composition according to the present invention can comprise

i) 35-55% by weight, preferably 40-50% by weight, of the active compound permethrin,
ii) 5-15% by weight, preferably 6-12% by weight, more preferably 7-10% by weight, of imidacloprid
iii) 20-60% by weight, preferably 25-50% by weight, of dimethyl sulfoxide,
iv) 0-10% by weight, preferably 0-7% by weight, more preferably 0-5% by weight, especially 0.01-5%, of anti-nucleating agent,
and optionally furthermore one or more of
v) 0- 0.3% by weight, preferably 0.05-0.25% by weight, most preferably 0.05-0.15% by weight, of antioxidant,
vi) 0-0.3% by weight, preferably 0.05-0.25% by weight, most preferably 0.05-0.15% by weight, of stabilizer,
vii) 0-20% by weight, preferably 5-20% by weight, of co-solvent, and
viii) 0-10 % by weight, preferably 0.1-7 % by weight, more preferably 1-5 % by weight, especially 2-5 % by weight, of spreading agent.

In embodiments of compositions of the present invention comprising anti-nucleating agent, the anti-nucleating agent can be selected from the group consisting of polyvinylpyrrolidone, polyvinyl alcohols, copolymers of vinyl acetate and of vinylpyrrolidone, polyethylene glycols, benzyl alcohol, mannitol, glycerol, sorbitol or polyoxyethylenated esters of sorbitan; lecithin or sodium carboxymethylcellulose; or acrylic derivatives, such as methacrylates and others, anionic surfactants, such as alkaline stearates, in particular sodium, potassium or ammonium stearate; calcium stearate or triethanolamine stearate; sodium abietate; alkyl sulphates, in particular sodium lauryl sulphate and sodium cetyl sulphate; sodium dodecylbenzenesulphonate or sodium dioctyl sulphosuccinate; or fatty acids, in particular those derived from coconut oil, cationic surfactants, such as water-soluble quaternary ammonium salts of formula $N^+R'R''R'''R''''Y^-$, in which

the R radicals are identical or different optionally hydroxylated hydrocarbon radicals and $Y^-$ is an anion of a strong acid, such as halide, sulphate and sulphonate anions; cetyltrimethylammonium bromide is one of the cationic surfactants which can be used, amine salts of formula NR'R"R"', in which the R radicals are identical or different optionally hydroxylated hydrocarbon radicals; octadecylamine hydrochloride is one of the cationic surfactants which can be used, non-ionic surfactants, such as optionally polyoxyethylenated esters of sorbitan, or polyoxyethylenated alkyl ethers; polyethylene glycol stearate, polyoxyethylenated derivatives of castor oil, polyglycerol esters, polyoxyethylenated fatty alcohols, polyoxyethylenated fatty acids or copolymers of ethylene oxide and of propylene oxide, amphoteric surfactants, such as substituted lauryl compounds of betaine, or a mixture of at least two of the compounds listed above. Especially, the anti-nucleating agent can be selected from the group of PEG(20)sorbitan monolaurate and polyoxyethylene (20) sorbitan monooleate and mixtures thereof.

Furthermore, a composition according to the present invention can comprise

i) 35-55% by weight, preferably 40-50% by weight, of the active compound permethrin,
ii) 5-15% by weight, preferably 6-12% by weight, more preferably 7-10% by weight, of imidacloprid
iii) 20-60% by weight, preferably 25-50% by weight, of dimethyl sulfoxide,
iv) 0-10 % by weight, preferably 0.1-7 % by weight, more preferably 1-5 % by weight, especially 2-5 % by weight, of spreading agent,
and optionally furthermore one or more of
v) 0- 0.3% by weight, preferably 0.05-0.25% by weight, most preferably 0.05-0.15% by weight, of antioxidant,
vi) 0-0.3% by weight, preferably 0.05-0.25% by weight, most preferably 0.05-0.15% by weight, of stabilizer,
vii) 0-10% by weight, preferably 0-7% by weight, more preferably 0-5% by weight, especially 0.01-5%, of anti-nucleating agent, and
viii) 0-20% by weight, preferably 5-20% by weight, of co-solvent.

In embodiments of compositions of the present invention comprising spreading agent, the spreading agent can be selected from the group consisting of fatty acid esters, such as isopropyl myristate, triglycerides, mixtures of triglycerides, and mixtures of triglyceride(s) and isopropyl myristate. Especially, triglycerides can be selected from the group consisting of triglycerides of formula (T)

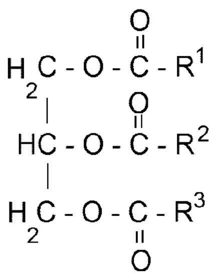

(T)

wherein at least one, preferably at least two, especially all of $R^1$, $R^2$, and $R^3$ are independently selected from straight chain $C_8$ alkyl, straight chain $C_9$ alkyl, and straight chain $C_{10}$ alkyl. Mixtures of triglycerides can be mixtures of triglycerides which can consist of or comprise triglycerides of formula (T), wherein at least one, preferably at least two, especially all of $R^1$, $R^2$, and $R^3$ are independently selected from straight chain $C_8$ alkyl, straight chain $C_9$ alkyl, and straight chain $C_{10}$ alkyl. In mixtures of triglyceride(s) and isopropyl myristate, the triglyceride(s) can consist of or comprise triglyceride(s) of formula (T), wherein at least one, preferably at least two, especially all of $R^1$, $R^2$, and $R^3$ are independently selected from straight chain $C_8$ alkyl, straight chain $C_9$ alkyl, and straight chain $C_{10}$ alkyl.

In particular, triglyceride(s) can be $C_8$ -$C_{10}$ caprylic/capric triglyceride(s), especially triglyceride(s) can be selected from Crodamol GTCC, Rofetan GTCC, Miglyol 810, 812, 818, 829, 840 and 8810. (For definition of the miglyols, reference can be made e.g. to H. P. Fiedler, Lexikon der Hilfsstoffe fur Pharmazie, Kosmetik und angrenzende Gebiete [Encyclopaedia of Auxiliaries for Pharmacy, Cosmetics and Related Fields], pages 1008-1009, Vol. 2, Editio Cantor Verlag Aulendorf (1996).)

A composition according to the present invention can comprise

i) 35-55% by weight, preferably 40-50% by weight, of the active compound permethrin,
ii) 5-15% by weight, preferably 6-12% by weight, more preferably 7-10% by weight, of imidacloprid
iii) 20-60% by weight, preferably 25-50% by weight, of dimethyl sulfoxide,
iv) 0-0.3% by weight, preferably 0.05-0.25% by weight, most preferably 0.05-0.15% by weight, of stabilizer,

and optionally furthermore one or more of

v) 0- 0.3% by weight, preferably 0.05-0.25% by weight, most preferably 0.05-0.15% by weight, of antioxidant,
vi) 0-20% by weight, preferably 5-20% by weight, of co-solvent,
vii) 0-10% by weight, preferably 0-7% by weight, more preferably 0-5% by weight, especially 0.01-5%, of anti-nucleating agent, and
viii) 0-10 % by weight, preferably 0.1-7 % by weight, more preferably 1-5 % by weight, especially 2-5 % by weight, of spreading agent.

In embodiments of compositions of the present invention comprising stabilizer, the stabilizer can be selected from the group of organic acids, and mixtures thereof, especially can be selected from the group of citric acid, ascorbic acid, tartaric acid, lactic acid, succinic acid and malic acid, and mixtures thereof.

Preferably, a composition according to the present invention, especially a spot-on composition according to the present invention, can be a fluid composition, in particular a liquid composition.

Compositions of the present invention may contain less than 0,7 % by weight, preferably less than 0,6 % by weight, more preferably less than 0,5 % by weight, especially less than 0,4 % by weight, further especially less than 0,2 % by weight of water, based on the total weight of the composition. Water content may be determined by Karl Fischer method. Water content in the sample was determined according to Karl Fischer method, using 0,400 g sample weight and Hydranal Composite 2 or Hydranal Composite 1 as titration solution.

A composition of the present invention, especially a fluid composition of the present invention, can have for example a density of 1.1 to 1.3 g/ml. In particular, the density can be at least 1.12 g/ml, preferably at least 1.14 g/ml, more preferably at least 1.15 g/ml.

Due to a high density of e.g. at least 1.12 g/ml, high amounts of active ingredients may be provided per ml or drop of (fluid) composition on skin regions, especially on skin regions directly surrounding parasites and/or into gaps between parasites (e.g. ticks) penetrating the skin and skin. This contributes to an effective application of a composition according to the present invention onto parasites or skin regions surrounding parasites during a treatment for controlling or reducing parasites on subjects, especially on animals.

In the context of the present application the term "density" of a substance (e.g. of a composition) can be defined as mass divided by volume:

$$\rho = \frac{m}{V}$$

where $\rho$ is the density (unit used herein: g/ml), m is the mass (unit used herein: g), and V is the volume (unit used herein: ml). In particular, the density may be determined at a temperature of 20 °C, especially at a temperature of 20 °C and at a pressure of 1 atm.

According to one embodiment, the composition of the present invention can have a weight ratio (weight of imidacloprid) : (weight of dimethyl sulfoxide) of 0.2 to 0.4 and/or can have a weight ratio (weight of permethrin) : (weight of dimethyl sulfoxide) of 0.9 to 2.

The compositions according to the invention can be prepared by conventional processes by mixing the active compounds under stirring with the other components and preparing a solution. The process according to the present invention comprises the following steps:

- adding dimethyl sulfoxide and optionally co-solvent into a mixer
- (optionally) adding veterinarily acceptable excipients into dimethyl sulfoxide or solvent mixture under stirring until clear solution is obtained
- adding permethrin to the mixture under stirring until clear solution is obtained
- adding imidacloprid to the mixture under stirring until clear solution is obtained.

The manufacturing process proceeds at temperatures between 10° and 40°C, preferably between 15° and 30°C, most preferably between 18 and 25°C.

The present invention provides a process for the preparation of a composition according to the present invention which comprises

(i) adding dimethyl sulfoxide and optionally co-solvent into a mixer,
(ii) optionally adding one or more excipients, in particular one or more veterinarily acceptable excipients, into dimethyl sulfoxide or solvent mixture obtained after step (i) under stirring until a solution is obtained,
(iii) adding permethrin to dimethyl sulfoxide or solvent mixture obtained after step (i) or to the solution obtained after

step (ii) under stirring until a solution is obtained,
(iv) adding imidacloprid to the solution obtained after step (iii) under stirring until a solution is obtained.

In step (iii) permethrin can be added in an amount that the solution obtained in step (iv) comprises 35-55% by weight, preferably 40-50% by weight, of the active compound permethrin, based on the total weight of the solution obtained in step (iv). In step (iv) imidacloprid can be added in an amount that the solution obtained in step (iv) comprises 5-15% by weight, preferably 6-12% by weight, more preferably 7-10% by weight, of imidacloprid, based on the total weight of the solution obtained in step (iv). In step (i) dimethyl sulfoxide can be added in an amount that the solution obtained in step (iv) comprises 20-60% by weight, preferably 25-50% by weight, of dimethyl sulfoxide, based on the total weight of the solution obtained in step (iv). According to one embodiment, a composition of the present invention is the solution obtainable by carrying out the preparation processes set forth in the present application, in particular the solution obtainable by carrying out a process comprising or consisting of steps (i) to (iv) supra.

Step (iii) and/or step (iv), preferably all steps (i) to (iv), can be carried out at temperature between 10° and 40°C, preferably between 15° and 30°C, most preferably between 18 and 25°C.

Furthermore, the present invention provides a process for the preparation of a composition according to the present invention which comprises

(i) adding dimethyl sulfoxide and optionally co-solvent into a mixer,
(ii) optionally adding one or more excipients, in particular one or more veterinarily acceptable excipients, into dimethyl sulfoxide or solvent mixture obtained after step (i) under stirring until a solution is obtained,
(iii ') adding imidacloprid to dimethyl sulfoxide or solvent mixture obtained after step (i) or to the solution obtained after step (ii) under stirring until a solution is obtained,
(iv ') adding permethrin to the solution obtained after step (iii ') under stirring until a solution is obtained.

In step (iv ') permethrin can be added in an amount that the solution obtained in step (iv ') comprises 35-55% by weight, preferably 40-50% by weight, of the active compound permethrin, based on the total weight of the solution obtained in step (iv '). In step (iii ') imidacloprid can be added in an amount that the solution obtained in step (iv ') comprises 5-15% by weight, preferably 6-12% by weight, more preferably 7-10% by weight, of imidacloprid, based on the total weight of the solution obtained in step (iv '). In step (i) dimethyl sulfoxide can be added in an amount that the solution obtained in step (iv ') comprises 20-60% by weight, preferably 25-50% by weight, of dimethyl sulfoxide, based on the total weight of the solution obtained in step (iv '). According to one embodiment, a composition of the present invention is the solution obtainable by carrying out the preparation processes set forth in the present application, in particular the solution obtainable by carrying out a process comprising or consisting of steps (i) to (iv ') supra.

Step (iii ') and/or step (iv '), preferably all steps (i) to (iv '), can be carried out at temperature between 10° and 40°C, preferably between 15° and 30°C, most preferably between 18 and 25°C.

A composition according to the present invention can be a composition for use as a medicament. In particular, a composition according to the present invention can be a composition for use as a medicament for controlling parasites, especially parasitic insects, in particular on subjects, especially on skin and/or hair of subjects. Furthermore, a composition according to the present invention can be a composition for use as a medicament for eliminating or reducing parasites, especially parasitic insects, in particular on subjects, especially on skin and/or hair of subjects.

The term "subject" can comprise humans and animals, especially warm-blooded animals, such as e.g. household animals (especially pet animals) and laboratory animals, especially e.g. dogs, cats, horses, sheep, and rodents, such as gerbils, hamsters, chinchillas, fancy rats and guinea pigs.

In particular, the parasites can be ectoparasites. Especially, the parasites can be one or more of lice, ticks, fleas and mites. For example, parasites can be: parasites from the order of the Metastigmata e.g. Hyalomma spp., Rhipicephalus spp., Argas spp., Boophilus spp., Haemaphysalis spp., Amblyomma spp., Dermacentor spp., Ixodes spp., Ornithodorus spp., Otobius spp., e.g. Rhipicephalus sanguineus; from the order of the Anoplura e.g. Haematopinus spp., Pediculus spp., Solenopotes spp., Linognathus spp., Pthirus spp.; from the order of the Mallophaga e.g. Trimenopon spp., Eomenacanthus spp., Menopon spp., Menacanthus spp., Trichodectes spp., Damalinea spp., Felicola spp., Bovicola spp.; from the order of the Diptera e.g. Aedes spp., Simulium spp., Culex spp., Phlebotomus spp., Chrysops spp., Musca spp., Tabanus spp., Hydrotaea spp., Muscina spp., Haematobosca spp., Haematobia spp., Fannia spp., Stomoxys spp., Glossina spp., Lucilia spp., Calliphora spp., Cordylobia spp., Auchmero-myia spp., Cochliomyia spp., Chrysomyia spp., Sarcophaga spp., Gasterophilus spp., Wohlfartia spp., Oesteromyia spp., Oedemagena spp., Hypoderma spp., Oestrus spp., Melophagus spp., Rhinoestrus spp., Hippobosca spp.; from the order of the Siphonaptera e.g. Ctenocephalides spp., e.g. Ctenocephalides felis, Ceratophyllus spp., Echidnophaga spp., Pulex spp.; from the order of the Mesostigmata e.g. Ornithonyssus spp., Dermanyssus spp., Pneumonyssus spp.; from the order of the Prostigmata e.g. Cheyletiella spp., Myobia spp., Psorergates spp., Neotrombi-cula spp.; Demodex spp., from the order of the Astigmata e.g. Acarus spp., Psoroptes spp., Myocoptes spp., Chorioptes spp., Sarcoptes spp., Notoedres spp., Otodectes spp.,

Knemidocoptes spp., Neoknemidocoptes spp. Cytodites spp., Laminosioptes spp.

The present invention pertains also to the following formulation embodiments:

The Composition Embodiment 1:

A composition for spot-on application comprising

A. 35-55% by weight of the active compound permethrin
B. 5-15% by weight of imidacloprid
C. 20-60% by weight of dimethyl sulfoxide and

optionally one or more veterinarily acceptable excipients.

The Composition Embodiment 2:

A composition for spot-on application comprising

i) 40-50% by weight of the active compound permethrin
ii) 7-10% by weight of imidacloprid
iii) 20-53% by weight of dimethyl sulfoxide and

optionally one or more veterinarily acceptable excipients.

The Composition Embodiment 3:

A composition for spot-on application comprising

i) 35-55% by weight of the active compound permethrin
ii) 5-15% by weight of imidacloprid
iii) 20-60% by weight of dimethyl sulfoxide and
iv) 0-20% by weight of co-solvent
v) 0- 0.3% by weight of antioxidants
vi) 0-0.3% by weight of stabilizers
vii) 0-10% by weight of anti-nucleating agent and/or
viii) 0-10 % of spreading agent.

The Composition Embodiment 4:

A composition for spot-on application according to Composition Embodiment 1 to 3 comprising co-solvent in the range of 0-20% by weight, preferably 5-20% by weight, wherein co-solvent is selected from NMP or N-methylimidazole.

The Composition Embodiment 5:

A composition for spot-on application according to Composition Embodiment 1 to 4 comprising anti-nucleating agent in the range of 0-10% by weight, preferably 0-7% by weight, most preferably 0-5% by weight, wherein anti-nucleating agent is selected from PEG(20)sorbitan monolaurate or polyoxyethylene (20) sorbitan monooleate.

The Composition Embodiment 6:

A composition for spot-on application according to Composition Embodiment 1 to 5 comprising spreading agent in the range of 0-10% by weight, preferably 0-7% by weight, most preferably 0-5% by weight, wherein spreading agent is selected from $C_8$ -$C_{10}$ caprylic/capric triglyceride.

The Composition Embodiment 7:

A composition for spot-on application according to Composition Embodiment 1 to 6 comprising antioxidant in

the range of 0-0.3% by weight, preferably in the range of 0.05-0.25%, most preferably in the range of 0.05-0.15%; preferably selected from BHA or BHT.

The Composition Embodiment 8:

A composition for spot-on application according to Composition Embodiment 1-7 comprising from 20 to 30% by weight of dimethyl sulfoxide, from 10 to 20% N-methylpirrolidone, from 2-5% of Miglyol and from 0.05 to 0.1 % of BHT.

The Composition Embodiment 8 a):

A composition for spot-on application according to Composition Embodiment 1-7 comprising from 20 to 30% by weight of dimethyl sulfoxide, from 10 to 20% by weight N-methylpirrolidone, from 2-5% by weight of $C_8$ -$C_{10}$ caprylic/capric triglyceride and from 0.05 to 0.1 % by weight of BHT.

The composition according to the present invention can be filled into containers for single dose application. Suitable containers are, for example, plastic tubes consisting of polypropylene, pipettes consisting of polypropylene or of a blister film (polypropylene/cyclic-olefin-copolymer/ polypropylene) and a foil lidstock (aluminium/polypropylene co-extruded). The tubes or pipettes may be sealed into secondary packaging such as clear PVC blister closed by heat sealing with aluminium foil, polychlorotrifluoroethylene PCTFE/PVC heat sealed blister packs or aluminium sachets in order to protect the formulation from moisture or evaporation. The composition of the present invention may be filled into primary packaging material and packed into secondary packaging under inert gas atmosphere. Preferably nitrogen or argon can be used as inert gas atmosphere in the packaging procedure, wherein nitrogen is especially preferred.

The compositions according to the invention are particularly suitable for controlling ectoparasites, preferably ticks and/or fleas, on animals, in particular warm-blooded animals. The compositions according to the invention are preferably used for household animal and laboratory animals. More preferably the composition is used for dogs and rodents, such as gerbils, hamsters, chinchillas, fancy rats and guinea pigs. Most preferably the composition is used for dogs.

The present invention is illustrated using the following non-limiting examples.

Examples

Example 1

| Ingredient | Content |
|---|---|
| PERMETHRIN, purity 98%, total impurities 1.5%, cis:trans ratio 40:60 | 500 mg |
| IMIDACLOPRID, purity 99.2%, total impurities 0.18% | 100 mg |
| MIGLYOL 812 | 50mg |
| DMSO | 510 mg |
| BHT | 1 mg |
| Citric acid | 1 mg |

*Manufacturing procedure*

In the mixer dimethyl sulfoxide is added. To the solvent butylated hydroxytoluene and citric acid are added, the mixture is stirred until clear solution is obtained. Under stirring Miglyol 812, permethrin and imidacloprid are added consecutively and the mixture is stirred until clear solution is obtained. Manufacture takes place at the temperature between 19°C- 24°C. During the manufacturing procedure appearance, density and water content are controlled. Density 1.1632 g/ml, water content 0.343% (determined by Karl-Fischer method).

The prepared solution is filled in tubes or pipettes under nitrogen atmosphere.

Example 2

| Ingredient | Content |
|---|---|
| PERMETHRIN | 500 mg |
| IMIDACLOPRID | 100 mg |
| MIGLYOL 812 | 50 mg |
| N-METHYLPIRROLIDONE | 200 mg |
| DMSO | 310 mg |
| BHT | 1 mg |
| Citric acid | 1 mg |

*Manufacturing procedure*

In the mixer dimethyl sulfoxide and N-methyl-2 pyrrolidone are combined. To the solvent mixture butylated hydroxytoluene and citric acid are added, the mixture is stirred until clear solution is obtained. Under stirring Miglyol 812, permethrin and imidacloprid are added consecutively and the mixture is stirred until clear solution is obtained. Manufacture takes place at the temperature between 19°C- 24°C. During the manufacturing procedure appearance, density and water content are controlled. Density 1.1524 g/ml, water content 0.533% (determined by Karl-Fischer method).
The prepared solution is filled in tubes or pipettes under nitrogen atmosphere.

Manufacturing methods for Examples 3-9 correspond to the manufacturing procedures disclosed in Examples 1 and 2.

Example 3

| Ingredient | Content |
|---|---|
| PERMETHRIN | 500 mg |
| IMIDACLOPRID | 100 mg |
| MIGLYOL 812 | 50mg |
| DMSO | 460 mg |
| BHT | 1 mg |
| Citric acid | 1 mg |
| Tween 20 | 50mg |

Density 1.1516 g/ml, water content 0.323% (determined by Karl-Fischer method)

Example 4

| Ingredient | Content |
|---|---|
| PERMETHRIN | 500 mg |
| IMIDACLOPRID | 100 mg |
| MIGLYOL 812 | 50 mg |
| N-METHYLPIRROLIDONE | 200 mg |

(continued)

| Ingredient | Content |
|---|---|
| DMSO | 260mg |
| BHT | 1 mg |
| Citric acid | 1 mg |
| Tween 20 | 50mg |

Example 5

| Ingredient | Content |
|---|---|
| PERMETHRIN | 500 mg |
| IMIDACLOPRID | 100 mg |
| MIGLYOL 812 | 50mg |
| DMSO | 460 mg |
| BHT | 1 mg |
| Citric acid | 1 mg |
| Tween 80 | 50mg |

Example 6

| Ingredient | Content |
|---|---|
| PERMETHRIN | 500 mg |
| IMIDACLOPRID | 100 mg |
| MIGLYOL 812 | 50 mg |
| N-METHYLPIRROLIDONE | 200 mg |
| DMSO | 260mg |
| BHT | 1 mg |
| Citric acid | 1 mg |
| Tween 80 | 50mg |

Example 7

| Ingredient | Content |
|---|---|
| PERMETHRIN | 500 mg |
| IMIDACLOPRID | 100 mg |
| N-METHYLPIRROLIDONE | 200 mg |
| DMSO | 360mg |
| BHT | 1 mg |

(continued)

| Ingredient | Content |
| --- | --- |
| Citric acid | 1 mg |

Example 8

| Ingredient | Content |
| --- | --- |
| PERMETHRIN | 500 mg |
| IMIDACLOPRID | 100 mg |
| MIGLYOL 812 | 50 mg |
| N-METHYLPIRROLIDONE | 200 mg |
| DMSO | 311 mg |
| BHT | 1 mg |

Example 9

| Ingredient | Content |
| --- | --- |
| PERMETHRIN | 500 mg |
| IMIDACLOPRID | 100 mg |
| MIGLYOL 812 | 50 mg |
| DMSO | 511 mg |
| BHT | 1 mg |

Example 10

| Ingredient | Content |
| --- | --- |
| PERMETHRIN | 500 mg |
| IMIDACLOPRID | 100 mg |
| MIGLYOL 812 | 50 mg |
| N-METHYLPIRROLIDONE | 200 mg |
| DMSO | 299 mg |
| BHT | 1 mg |
| Citric acid | 1 mg |

*Manufacturing procedure*

In the mixer dimethyl sulfoxide and N-methyl-2 pyrrolidone are added. To the solvent mixture butylated hydroxytoluene and citric acid are added, the mixture is stirred until clear solution is obtained. Under stirring imidacloprid, permethrin and Miglyol 812 are added consecutively and the mixture is stirred until clear solution is obtained. Manufacture takes place at the temperature between 19°C- 24°C. During the manufacturing procedure appearance, density and

water content are controlled. Density 1.1510 g/ml, water content 0.1 % (determined by Karl-Fischer method).

Example 11

In case of non-systemic spot on formulations penetration of the active ingredients through the skin is not desirable. We have compared the formulations prepared in accordance with the present invention (Example 1 and Example 10) with commercially available product Advantix, which is prepared in accordance with the teaching of EP 1379138.

Comparison of permeability was performed on dog skin patches mounted in Franz diffusion cells.

Dog skin parches were obtained from MediTox s.r.o., Czech Republic. Skin patches were collected immediately following animal sacrifice. The patches were shaven, excess fat from skin was removed and the patches were frozen (-20°C) and shipped.

Prior to use, skin patches were allowed to thaw to room temperature. After thawing patches were mounted in Franz diffusion cells (diffusing surface of 0,785 $cm^2$) and 8 ml of isotonic PBS (phosphate buffered saline) containing 2% of bovine albumin was used as receptor fluid. The diffusion cells were left to hydrate for 30 minutes in water bath maintained at temperature of 37°C. The surface skin temperature was 32°C. Receptor fluid was continuously stirred (150 RPM) using immersible magnetic stirrer and small stirring fleas inside the receptor part of Franz diffusion cells.

The experiments were carried out on two parallels for each formulation. 0.4 ml of formulation was applied to the skin and time was measured. Due to expected low permeability samples were taken at 0.5., 1., 2., 3., 4., 5., 6. and 8. hour. Samples were then treated with ice cold methanol and centrifuged (15000g, 15 minutes) to precipitate and remove albumin.

Supernatants were analyzed for imidacloprid using HPLC (Agilent 1100). HPLC column Phenomenex Luna C18(2) 50×2mm, 3um particle, was used and gradient elution using acetonitrile and 0,1% ortho -phosphoric acid. Detection was set at 270 nm. Concentrations were calculated according to calibration curve.

Due to relatively high limit of quantification only concentrations at 6. and 8. hour could be used for calculation of flux. Results are presented as averages +/- SEM in the following diagram shown in Fig. 1.

As evident from the diagram shown in Fig. 1, the penetration of imidacloprid through the skin for the compositions according to the invention is lower than for the commercial product formulation Advantix comprising only NMP as the carrier solvent.

## Claims

**1.** A composition for dermal application comprising

i) 35-55% by weight of the active compound permethrin
ii) 5-15% by weight of imidacloprid
iii) 20-60% by weight of dimethyl sulfoxide and
iv) optionally one or more veterinarily acceptable excipients.

**2.** A composition according to claim 1 for spot-on application comprising

i) 35-55% by weight of the active compound permethrin
ii) 5-15% by weight of imidacloprid
iii) 20-60% by weight of dimethyl sulfoxide and

optionally one or more veterinarily acceptable excipients.

**3.** A composition according to claim 1 or 2 comprising

i) 40-50% by weight of the active compound permethrin
ii) 7-10% by weight of imidacloprid
iii) 20-53% by weight of dimethyl sulfoxide and

optionally one or more veterinarily acceptable excipients.

**4.** A composition according to claims 1 or 2 comprising

i) 35-55% by weight of the active compound permethrin
ii) 5-15% by weight of imidacloprid
iii) 20-60% by weight of dimethyl sulfoxide and
iv) 0-20% by weight of co-solvent
v) 0- 0.3% by weight of antioxidants
vi) 0-0.3% by weight of stabilizers
vii) 0-10% by weight of anti-nucleating agent and/or
viii) 0-10 % of spreading agent.

**5.** A composition according to any of the preceding claims comprising co-solvent in the range of 0-20% by weight, preferably 5-20% by weight, wherein the co-solvent is selected from NMP or N-methylimidazole.

**6.** A composition according to any of the preceding claims comprising anti-nucleating agent in the range of 0-10% by weight, preferably 0-7% by weight, most preferably 0-5% by weight, wherein the anti-nucleating agent is selected from PEG(20)sorbitan monolaurate or polyoxyethylene (20) sorbitan monooleate

**7.** A composition according to any of the preceding claims comprising spreading agent in the range of 0-10% by weight, preferably 0-7% by weight, most preferably 0-5% by weight, wherein the spreading agent is selected from $C_8$ -$C_{10}$ caprylic/capric triglyceride.

**8.** A composition according to any of the preceding claims comprising antioxidant in the range of 0-0.3% by weight, preferably in the range of 0.05-0.25% by weight, most preferably in the range of 0.05-0.15% by weight, wherein the antioxidant selected from BHA or BHT.

**9.** Composition according to any of claims 1 to 8 for use as a medicament.

**10.** Composition according to any of claims 1 to 8 for use as a medicament for controlling parasites.

**11.** Composition according to any of claims 1 to 8 for use as a medicament for eliminating or reducing parasites.

**Patentansprüche**

**1.** Zusammensetzung zur dermalen Verabreichung, umfassend

i) 35-55 Gew.-% des Wirkstoffes Permethrin
ii) 5-15 Gew.-% Imidacloprid
iii) 20-60 Gew.-% Dimethylsulfoxid und
iv) gegebenenfalls einen oder mehr veterinärmedizinisch verträgliche Exzipienten.

**2.** Zusammensetzung gemäß Anspruch 1 zur Spot-On-Verabreichung, umfassend

i) 35-55 Gew.-% des Wirkstoffes Permethrin
ii) 5-15 Gew.-% Imidacloprid
iii) 20-60 Gew.-% Dimethylsulfoxid und
gegebenenfalls einen oder mehr veterinärmedizinisch verträgliche Exzipienten.

**3.** Zusammensetzung gemäß Anspruch 1 oder 2, umfassend

i) 40-50 Gew.-% des Wirkstoffes Permethrin
ii) 7-10 Gew.-% Imidacloprid
iii) 20-53 Gew.-% Dimethylsulfoxid und
gegebenenfalls einen oder mehr veterinärmedizinisch verträgliche Exzipienten.

**4.** Zusammensetzung gemäß den Ansprüchen 1 oder 2, umfassend

i) 35-55 Gew.-% des Wirkstoffes Permethrin
ii) 5-15 Gew.-% Imidacloprid

iii) 20-60 Gew.-% Dimethylsulfoxid und
iv) 0-20 Gew.-% eines Colösungsmittels
v) 0-0,3 Gew.-% Antioxidantien
vi) 0-0,3 Gew.-% Stabilisatoren
vii) 0-10 Gew.-% eines Mittels gegen Keimbildung und/oder
viii) 0-10 % eines kriechaktiven Mittels.

**5.** Zusammensetzung gemäß einem der vorhergehenden Ansprüche, umfassend ein Colösungsmittel im Bereich von 0-20 Gew.-%, bevorzugt 5-20 Gew.-%, wobei das Colösungsmittel aus NMP oder N-Methylimidazol ausgewählt ist.

**6.** Zusammensetzung gemäß einem der vorhergehenden Ansprüche, umfassend ein Mittel gegen Keimbildung im Bereich von 0-10 Gew.-%, bevorzugt 0-7 Gew.-%, am stärksten bevorzugt 0-5 Gew.-%, wobei das Mittel gegen Keimbildung aus PEG(20)sorbitanmonolaurat oder Polyoxyethylen(20)sorbitanmonooleat ausgewählt ist.

**7.** Zusammensetzung gemäß einem der vorhergehenden Ansprüche, umfassend ein kriechaktives Mittel im Bereich von 0-10 Gew.-%, bevorzugt 0-7 Gew.-%, am stärksten bevorzugt 0-5 Gew.-%, wobei das kriechaktive Mittel aus $C_8$-$C_{10}$-Capryl-/Caprintriglycerid ausgewählt ist.

**8.** Zusammensetzung gemäß einem der vorhergehenden Ansprüche, umfassend ein Antioxidans im Bereich von 0-0,3 Gew.-%, bevorzugt im Bereich von 0,05-0,25 Gew.-%, am stärksten bevorzugt im Bereich von 0,05-0.15 Gew.-%, wobei das Antioxidans aus BHA oder BHT ausgewählt ist.

**9.** Zusammensetzung gemäß einem der Ansprüche 1 bis 8 zur Verwendung als ein Medikament.

**10.** Zusammensetzung gemäß einem der Ansprüche 1 bis 8 zur Verwendung als ein Medikament zum Kontrollieren von Parasiten.

**11.** Zusammensetzung gemäß einem der Ansprüche 1 bis 8 zur Verwendung als ein Medikament zum Beseitigen oder Verringerung von Parasiten.

**Revendications**

**1.** Composition pour application dermique comprenant

i) de 35 à 55 % en poids du composé actif perméthrine
ii) de 5 à 15 % en poids d'imidaclopride
iii) de 20 à 60 % en poids de sulfoxyde de diméthyle et
iv) facultativement un ou plusieurs excipients acceptables sur le plan vétérinaire.

**2.** Composition selon la revendication 1 pour application ponctuelle comprenant

i) de 35 à 55 % en poids du composé actif perméthrine
ii) de 5 à 15 % en poids d'imidaclopride
iii) de 20 à 60 % en poids de sulfoxyde de diméthyle et facultativement un ou plusieurs excipients acceptables sur le plan vétérinaire.

**3.** Composition selon la revendication 1 ou 2 comprenant

i) de 40 à 50 % en poids du composé actif perméthrine
ii) de 7 à 10 % en poids d'imidaclopride
iii) de 20 à 53 % en poids de sulfoxyde de diméthyle et facultativement un ou plusieurs excipients acceptables sur le plan vétérinaire.

**4.** Composition selon les revendications 1 ou 2 comprenant

i) de 35 à 55 % en poids du composé actif perméthrine
ii) de 5 à 15 % en poids d'imidaclopride

iii) de 20 à 60 % en poids de sulfoxyde de diméthyle et
iv) de 0 à 20 % en poids de co-solvant
v) de 0 à 0,3 % en poids d'antioxydants
vi) de 0 à 0,3 % en poids de stabilisants
vii) de 0 à 10 % en poids d'agent anti-nucléation et/ou
viii) de 0 à 10 % d'agent d'étalement.

**5.** Composition selon l'une quelconque des revendications précédentes comprenant un co-solvant dans la plage de 0 à 20 % en poids, de préférence de 5 à 20 % en poids, dans laquelle le co-solvant est choisi parmi le NMP ou le N-méthylimidazole.

**6.** Composition selon l'une quelconque des revendications précédentes comprenant un agent anti-nucléation dans la plage de 0 à 10 % en poids, de préférence de 0 à 7 % en poids, de manière préférée entre toutes de 0 à 5 % en poids, dans laquelle l'agent anti-nucléation est choisi parmi le monolaurate de PEG (20) sorbitane ou le monooléate de polyoxyéthylène (20) sorbitane.

**7.** Composition selon l'une quelconque des revendications précédentes comprenant un agent d'étalement dans la plage de 0 à 10 % en poids, de préférence de 0 à 7 % en poids, de manière préférée entre toutes de 0 à 5 % en poids, dans laquelle l'agent d'étalement est choisi parmi un triglycéride caprylique/caprique en $C_8$ à $C_{10}$.

**8.** Composition selon l'une quelconque des revendications précédentes comprenant un antioxydant dans la plage de 0 à 0,3 % en poids, de préférence dans la plage de 0,05 à 0,25 % en poids, de manière préférée entre toutes dans la plage de 0,05 à 0,15 % en poids, dans laquelle l'antioxydant est choisi parmi le BHA ou le BHT.

**9.** Composition selon l'une quelconque des revendications 1 à 8 pour utilisation en tant que médicament.

**10.** Composition selon l'une quelconque des revendications 1 à 8 pour utilisation en tant que médicament permettant de lutter contre les parasites.

**11.** Composition selon l'une quelconque des revendications 1 à 8 pour utilisation en tant que médicament permettant d'éliminer ou de réduire les parasites.

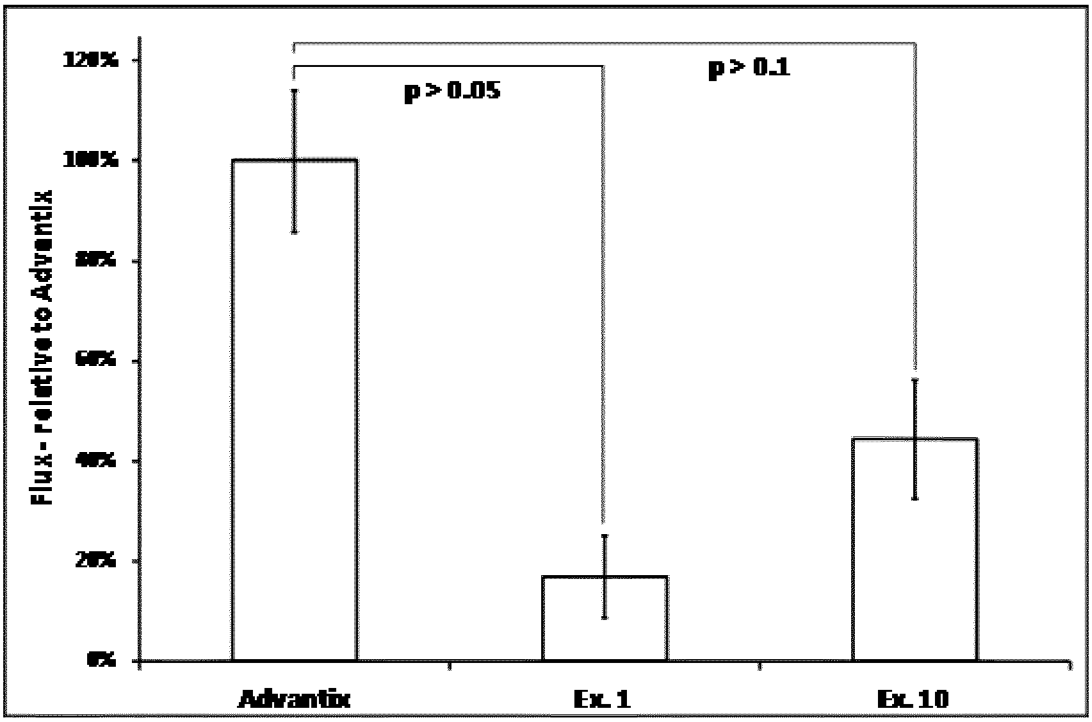
p > 0.05
p > 0.1
120%
100%
80%
60%
40%
20%
0%
Flux - relative to Advantix
Advantix
Ex. 1
Ex. 10

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 120286 A
- EP 518989 A
- EP 1638404 A
- EP 682869 A
- EP 796042 A
- EP 892606 A
- US 5661164 A
- WO 2002043494 A
- EP 1379138 A
- US 2006211655 A
- US 2006014724 A


### Non-patent literature cited in the description


- **H. P. FIEDLER.** Lexikon der Hilfsstoffe fur Pharmazie, Kosmetik und angrenzende Gebiete. Cantor Verlag Aulendorf, 1996, vol. 2, 1008-1009